# EUROPEAN PATENT APPLICATION

(11) **EP 2 772 842 A1**
(43) Date of publication of application: **03.09.2014**
(21) Application number: 13198233.2
(22) Date of filing: 18.12.2013
(51) Int. Cl.: G06F 3/0488, G06F 3/041, H04N 21/422

(54) **Display Apparatus, Input Apparatus, and Control Method Thereof**

(30) Priority: 28.02.2013 KR 20130021885
(71) Applicant: Samsung Electronics Co., Ltd, Gyeonggi-do 443-742 (KR)
(72) Inventor: Jung, Kyung-Hee, Gyeonggi-do (KR)
(74) Representative: Hewett, Jonathan Michael Richard

(57) **Abstract**

Disclosed are a display apparatus, an input apparatus, and control methods thereof, the display apparatus including: a display to display an image; a communicator to communicate with an input apparatus including a touch sensor to receive a user touch input; and a controller to set an input area of the touch sensor to correspond to a second region that is part of a first region of a screen displayed on the display, the second region being a variable region within the first region. Thus, errors in touch input by an input apparatus are reduced and user's convenience can be improved.

## Description

The present invention relates to a display apparatus, an input apparatus, and control methods thereof, more particularly to a display apparatus that receives a user input using an input apparatus with a touch sensor, an input apparatus, and control methods thereof.

A display system is a system that displays an image based on an image signal received from the outside or generated autonomously. The display system includes a display apparatus having a display panel to display an image and a plurality of devices classified according to functionality. The display system may be configured as a combination of different kinds of devices based on desired functions. For example, the display system may include a display apparatus and an input apparatus that transmits diverse commands to the display apparatus. Generally, the input apparatus is configured as a remote controller of the display apparatus.

In the related art, the input apparatus may be provided with a touch sensor to detect a user touch input and further include a separate display for improving user convenience of inputting a touch input. However, when the display is further mounted on the input apparatus having the touch sensor, cost of the input apparatus increases.

Thus, for saving costs, a virtual inputter for improving user convenience input is displayed on a screen of the display apparatus instead of installing a separate display on the input apparatus, and a user manipulates the touch sensor to conduct an input, watching the virtual inputter displayed on the screen.

However, the virtual inputter, such as a qwerty keyboard, is formed of buttons which are densely disposed, and the touch sensor has a limited size of input area, making it difficult for the user to select a desired button correctly via touch manipulation. Further, if the user makes a mistake of choosing a wrong neighboring area, it takes unnecessary effort and time to correct the mistake, causing user inconvenience.

According to an aspect of an exemplary embodiment of the present invention, there is provided a display apparatus including: a display configured to display an image; a communicator configured to communicate with an input apparatus including a touch sensor configured to receive a user touch input; and a controller configured to set an input area of the touch sensor to correspond to a second region that is part of a first region of a screen displayed on the display, wherein the second region is a variable region within the first region.

The controller may be further configured to determine a coordinate of the second region corresponding to a coordinate of the input area and control the communicator to receive coordinate information corresponding to a position of the user touch input on the touch sensor from the input apparatus.

The controller may be further configured to set the position of the user touch input as a center of the coordinate of the second region.

The communicator may be further configured to receive size information of the input area.

The controller may be further configured to set the second region to correspond to an enlarged or reduced size of the input area.

The controller may be further configured to control the communicator to receive the coordinate information corresponding to the position of the user touch input on a preset cycle.

A virtual inputter including at least one of a letter, a number, a symbol, and a special character may be displayed in the first region.

The display may be further configured to display the first region, the second region, and a user selected position such that they are distinguished from one another, and the controller may be further configured to determine whether a drag input command is an acceleration command by using a moving distance and a moving time of a drag in response to the drag input command on the touch sensor being received from the input apparatus, and control the display to change and display the second region in response to the drag input command being determined as an acceleration command.

The controller may be further configured to control the display to change and display the selected position within the second region in response to the drag input command being determined not to be an acceleration command.

The controller may be further configured to cancel setup of the second region in response receiving to a command from the input apparatus to cancel the user touch input.

The controller may be further configured to set a default area within the first region or a former second region as the second region in response to receiving a command from the input apparatus that a user touch input is detected, while the setup of the second region is canceled.

According to an aspect of another exemplary embodiment, there is provided an input apparatus of a display apparatus, the input apparatus including: a communicator configured to communicate with the display apparatus; a touch sensor configured to receive a user touch input; and a controller configured to set an input area of the touch sensor to correspond to a second region that is part of a first region of a screen displayed on a display of the display apparatus, wherein the second region is a variable region within the first region.

The controller may be further configured to determine a coordinate of the input area corresponding to a coordinate of the second region and control the communicator to transmit coordinate information corresponding to a position of the user touch input on the touch sensor to the display apparatus.

The controller may be further configured to control the communicator to transmit size information of the input area.

The second region may correspond to an enlarged or reduced size of the input area.

The controller may be further configured to control the communicator to transmit, on a preset cycle, the coordinate information corresponding to the position of the user touch input.

The controller may be further configured to control the communicator to transmit distance and speed information of a drag input on the touch sensor to the display apparatus in response to the drag input being detected.

According to an aspect of another exemplary embodiment, there is provided a control method of a display apparatus, the control method including: receiving a command with respect to a user touch input from an input apparatus including a touch sensor to receive the user touch input; setting an input area of the touch sensor to correspond to a second region that is part of a first region of a screen displayed on a display; and displaying the second region such that the second region is distinguished from the first region, wherein the second region is a variable region within the first region.

The setting may include: determining a coordinate of the second region corresponding to a coordinate of the input area; and receiving coordinate information corresponding to a position of the user touch input on the touch sensor from the input apparatus.

The setting may further include setting the position of the user touch input as a center of the coordinate of the second region.

The control method may further include receiving size information of the input area.

The setting may further include setting the second region corresponding to an enlarged or reduced size of the input area.

The control method may further include receiving, on a preset cycle, the coordinate information corresponding to the position of the user touch input.

A virtual inputter including at least one of a letter, a number, a symbol, and a special character may be displayed in the first region.

The displaying may display a user selected position such that the user selected position may be distinguished from the first region and the second region, and the method may further include: receiving a drag input command on the touch sensor from the input apparatus; determining whether the drag input command is an acceleration command by using a moving distance and a moving time of a drag; and changing and displaying the second region in response to the drag input command being determined as an acceleration command.

The control method may further include changing and displaying the selected position within the second region in response to the drag input command being determined not to be an acceleration command.

The control method may further include: receiving a command to cancel the user touch input from the input apparatus; and canceling setup of the second region.
The control method may further include: receiving a command from the input apparatus that a user touch input is detected, while the setup of the second region is canceled; and setting a default area within the first region or a former second region as the second region.

According to an aspect of another exemplary embodiment, there is provided control method of an input apparatus of a display apparatus, the control method including: receiving a user touch input on a touch sensor; and setting an input area of the touch sensor to correspond to a second region that is part of a first region of a screen displayed on a display of the display apparatus, wherein the second region is a variable region within the first region.

The setting the input area may include: determining a coordinate of the input area corresponding to a coordinate of the second region; and transmitting coordinate information corresponding to a position of the user touch input on the touch sensor to the display apparatus.

The control method may further include transmitting size information of the input area.

The second region may correspond to an enlarged or reduced size of the input area.

The control method may further include transmitting, on a preset cycle, the coordinate information corresponding to the position of the user touch input.

The control method may further include: detecting a drag input on the touch sensor; and transmitting distance and speed information of the drag input to the display apparatus.

According to an aspect of another exemplary embodiment, there is provided a display including: a communicator configured to receive a command in response to a user touch input on a touch sensor; and a controller configured to set a portion of a first region displayed on the display as a second region displayed on the display in response to the received command, wherein the second region corresponds to an area of the touch sensor.

The controller may be further configured to set the position of the second region within the first region based on a location of the user touch input on the touch sensor.

The controller may be further configured to change the location of the second region within the first region in response to receiving an acceleration command.

The controller may be further configured to select a first item displayed in the second region in response to receiving a select command.

The controller may be further configured to change a selection from the first item to a second item in response to receiving a drag command.

The first region displayed on the display may be a virtual controller and the second region displayed on the display may be a portion of the virtual controller.

The above and/or other aspects will become apparent and more readily appreciated from the following description of exemplary embodiments, taken in conjunction with the accompanying drawings, in which:
FIG. 1 illustrates a display system according to an exemplary embodiment.
FIG. 2 is a block diagram illustrating a configuration of the display system according to an exemplary embodiment.
FIGS. 3 to 8 illustrate screens displayed on a display of the display apparatus according to exemplary embodiments.
FIG. 9 is a flowchart illustrating a control method of an input apparatus according to an exemplary embodiment.
FIGS. 10 and 11 are flowcharts illustrating a control method of the display apparatus according to an exemplary embodiment.

Below, certain exemplary embodiments will be described in detail with reference to accompanying drawings so as to be easily realized by a person having ordinary knowledge in the art. The present invention may be embodied in various forms without being limited to exemplary embodiments set forth herein. Descriptions of well-known parts are omitted for clarity and conciseness, and like reference numerals refer to like elements throughout.

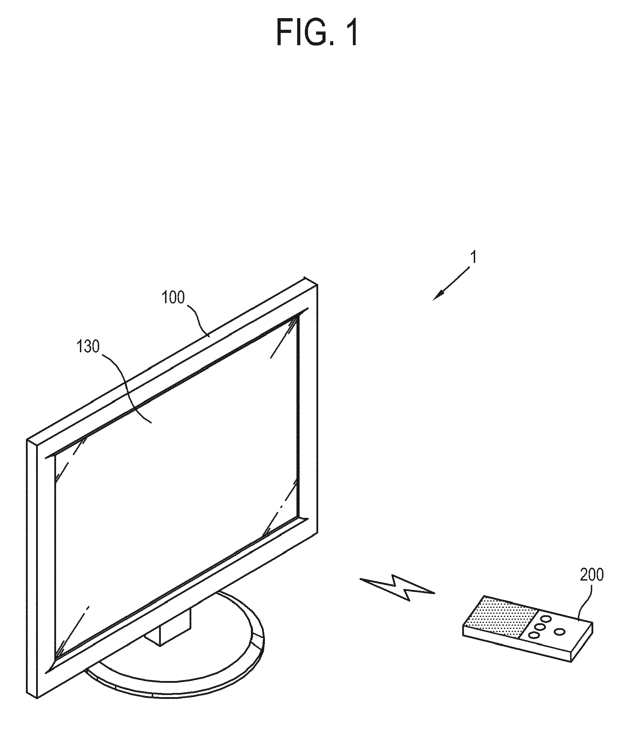

FIG. 1 illustrates a display system 1 according to an exemplary embodiment.

As shown in FIG. 1, the display system 1 according to the present exemplary embodiment includes a display apparatus 100 that processes an image signal according to a preset process to display an image and an input apparatus 200 that generates a preset command/data/information/signal to remotely control the display apparatus 100 and transmits the command/data/information/signal to the display apparatus 100.

In the display system 1 of the present exemplary embodiment, the display apparatus 100 is configured as a TV which displays a broadcast image based on a broadcast signals/broadcast information/broadcast data received from a transmitter of a broadcasting station and the input apparatus 200 is configured as a remote controller.

However, the display apparatus 100 may display any kind of image, without being limited to broadcast images. For example, the display apparatus 100 may display images, such as videos, still images, applications, on-screen displays (OSDs) based on signals/data received from various types of image sources (not shown) and a user interface (UI) (also referred to as a graphic user interface (GUI)) for controlling various operations.

The present exemplary embodiment may be also applied to a display system 1 with a different configuration from that of the present exemplary embodiment, for example, in which the display apparatus 100 is a monitor connected to a computer main body and the input apparatus 100 is a system communicating with the computer monitor. That is, the following example is provided for illustrative purposes only and may be modified variously depending on a configuration of the system, without limiting the present exemplary embodiment.

In the present exemplary embodiment, the input apparatus 200 is an external device capable of performing wireless communications with the display apparatus 100, wherein the wireless communications include wireless infrared communications and radio frequency (RF) communications. The input apparatus 200 is manipulated by a user to transmit a preset command to the display apparatus 100.

The input apparatus 200 includes a touch sensor 210 to receive a touch input of the user. Accordingly, the display apparatus 100 may control an image displayed on a display 130 based on information about the touch input of the user received from the input apparatus 200.

In addition to the touch sensor 210, the input apparatus 200 may further include a motion sensor (not shown) to detect a motion by the user and a button inputter (not shown) including a button, such as a number key and a menu key. The motion sensor may include a gyro sensor, an angular rate sensor, and a geomagnetic sensor.

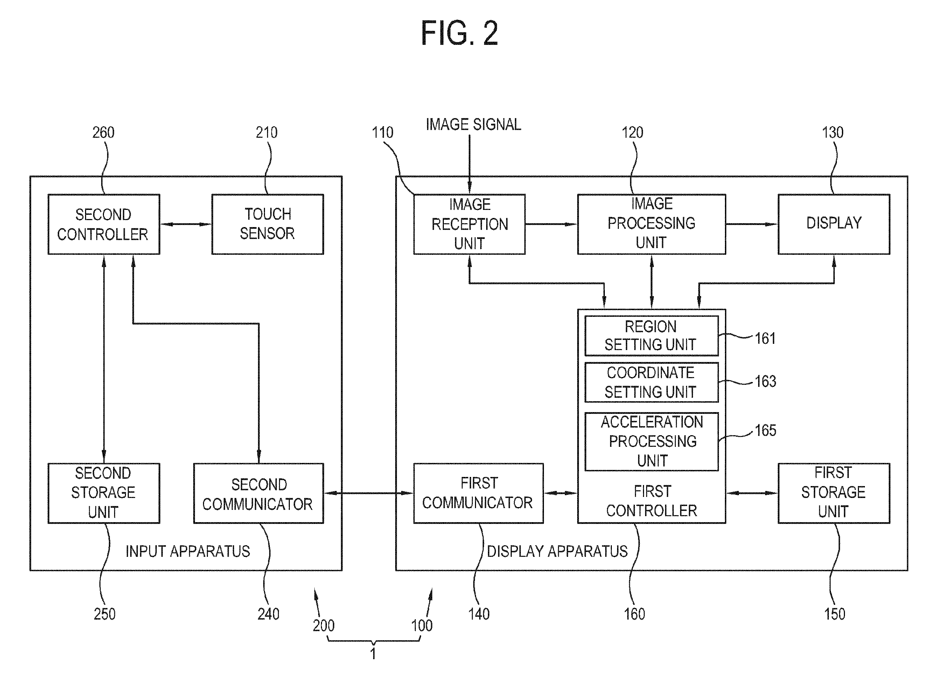

Hereinafter, configurations of the display apparatus 100 and the input apparatus 200 will be described in detail with reference to FIG. 2. FIG. 2 is a block diagram illustrating the configuration of the display system 1 according to an exemplary embodiment.

As shown in FIG. 2, the display apparatus 100 includes an image reception unit 110 to receive an image signal, an image processing unit 120 to process the image signal received by the image reception unit 110, the display 130 to display an image based on the image signal processed by the image processing unit 120, a first communicator 140 to communicate with the outside, a first storage unit 150 to store data, and a first controller 160 to control the display apparatus 100.

The input apparatus 200 includes the touch sensor 210 to receive a touch input of the user, a second communicator 240 to communicate with the outside, a second storage unit 250 to store data, and a second controller 260 to control the second communicator 240 to transmit a command based on a sensing result of the touch sensor 210 to the display apparatus 100. In the present exemplary embodiment, the input apparatus 200 does not include a separate display.

Hereinafter, the configuration of the display apparatus 100 will be described in detail.

The image reception unit 110 receives an image signal and transmits the signal to the image processing unit 120. The image reception unit 110 may be configured as various forms corresponding to standards of received image signals and configurations of the display apparatus 100. For example, the image reception unit 110 may receive an RF signal transmitted from a broadcasting station (not shown) wirelessly or receive image signals in accordance with composite video, component video, super video, SCART, and high definition multimedia interface (HDMI) standards via a cable. When the image signal is a broadcast signal, the image reception unit 110 includes a tuner to tune the broadcast signal by each channel.

Further, the image signal may be input from an external device, for example, a personal computer (PC), audiovisual (AV) equipment, a smartphone, and a smart pad. Also, the image signal may be derived from data received through a network, such as the Internet. In this case, the display apparatus 100 may conduct network communications via the first communicator 140 or further include a separate network communicator. In addition, the image signal may be derived from data stored in the nonvolatile first storage unit 150, such as a flash memory and a hard disk. The first storage unit 150 may be provided inside or outside the display apparatus 100. When the first storage unit 150 is provided outside the display apparatus 100, the display apparatus 100 may further include a connection unit (not shown) to connect to the first storage unit 150.

The image processing unit 120 processes an image signal according to various kinds of preset image processing processes. The image processing unit 120 outputs the processed image signal to the display 130, thereby displaying an image on the display 130.

The image processing unit 120 may perform any kind of image processing process, without being limited to, for example, decoding in accordance with different formats of images, de-interlacing, frame refresh rate conversion, scaling, noise reduction to improve image quality, detail enhancement, and line scanning. The image processing unit 120 may be provided as a group of components which independently conduct the aforementioned processes or as an integrated multi-functional component, such as a system on chip (SOC).

The display 130 displays an image based on the image signal processed by the image processing unit 120. The display 130 may be configured in various display modes using liquid crystals, plasma, light emitting diodes, organic light emitting diodes, a surface conduction electron emitter, a carbon nano-tube, nano-crystals, or the like, without being limited thereto.

The display 130 may further include an additional element based on a display mode thereof. For example, in a display mode using liquid crystals, the display 130 may include a liquid crystal display (LCD) panel (not shown), a backlight unit (not shown) to provide light to the panel, and a panel drive board (not shown) to drive the panel.

In the present exemplary embodiment, the display 130 displays a virtual inputter 30 as a UI for convenience of user input of a user using the touch sensor 210 of the input apparatus 200. The user may manipulate the touch sensor 210 while watching the virtual inputter 30 displayed on the display 130. In the present exemplary embodiment, an area in which the virtual inputter 30 is displayed on a screen of the display 130 is defined as a first region.

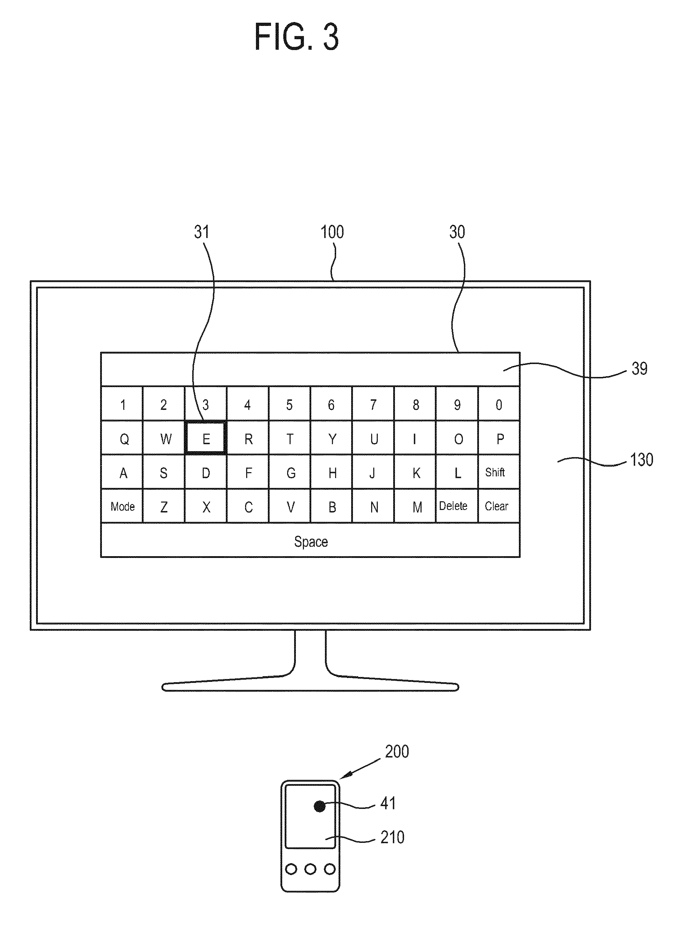

The virtual inputter 30 includes a virtual keyboard or a virtual keypad that includes at least one of a letter, a number, a symbol, and a special character, wherein the virtual key board may be configured as a qwerty keyboard shown in FIGS. 3 to 7.

The first communicator 140 transmits a command/data/information/signal received from the input apparatus 200 to the image processing unit 120. Further, the first communicator 140 may transmit a command/data/information/signal transmitted from the first controller 160 to the input apparatus 200.

The first communicator 140 may receive information about a position of the touch input of the user ("touch input position information") and information about an input area size ("input area size information") of the touch sensor 210 from the input apparatus 200. Here, the received touch input position information is coordinate information and may be received on a preset cycle from the input apparatus 200 according to control of the first controller 160.

The first communicator 140 may use a wireless communication method in communications between the display apparatus 100 and the input apparatus 200. The wireless communication method includes wireless infrared, RF, Zigbee, and Bluetooth communications.

The first communicator 140 is embedded in the display apparatus 100 in the present exemplary embodiment and may be configured as a dongle or module detachable from a connector (not shown) of the display apparatus 100.

The first storage unit 150 stores data according to control of the first controller 160. The first storage unit 150 may be configured as a nonvolatile storage medium, such as a flash memory and a hard disk drive. The first storage unit 150 is accessible by the first controller 160, and the data stored in the first storage unit 150 may be read/recorded/revised/deleted/updated by the first controller 160.

The first storage unit 150 may store, for example, an operating system to run the display apparatus 100, and various applications, image data, and optional data which are executable on the operating system. In the present exemplary embodiment, the first storage unit 150 further stores area information and coordinate information about the first region in which the virtual inputter 30 is displayed and a second region that is a variable region in the first region and is set corresponding to an input area of the touch sensor 120.

The first controller 160 performs control operations over various components of the display apparatus 100. For example, the first controller 160 conducts image processing by the image processing unit 120 and a control operation corresponding to a command from the input apparatus 200, thereby controlling the entire operations of the display apparatus 100.

In the present exemplary embodiment, the first controller 160 includes a region setting unit 161, a coordinate setting unit 163, and an acceleration processing unit 165.

The region setting unit 161 sets up an input area of the touch sensor 210 to correspond to the second region using the input area size information of the touch sensor 210. The set second region may have a size corresponding to a size of the input area of the touch sensor 210 enlarged or reduced by a preset ratio. Here, the input area size information may be received from the input apparatus 200 through the first communicator 140 or stored in advance in the first storage unit 150.

The coordinate setting unit 163 sets up coordinates of the first region and the second region based on the input area set up by the region setting unit 161, and information stored in the first storage unit 150. Here, since the second region is a variable region within the first region, the region setting unit 161 and the coordinate setting unit 163 may frequently update and store information about the variable second region in the first storage unit 150.

When coordinate information corresponding to the position of the touch input of the user is received from the input apparatus 200 through the first communicator 140, the coordinate setting unit 163 may calculate an input position input by the user based on the coordinate information received from the input apparatus 200 from the coordinate of the second region. The first controller 160 controls the display 130 to display the calculated input position input by the user to be distinguished from the first region and the second region.

When a command corresponding to a drag input with respect to the touch sensor 210 (i.e., holding down a touch on the touch sensor 210 while moving the touch a preset distance) is received from the input apparatus 200, the acceleration processing unit 165 determines whether the command is an acceleration command using information about a moving distance and a moving time of the drag of the command. In detail, when it is determined that the drag input of the received command moves a preset distance or longer within a preset time, the acceleration processing unit 165 recognizes the command as an acceleration command for the second region. Here, information about distance and time as criteria of judgment may be set and stored in advance in the first storage unit 150.

When the acceleration command is recognized, the acceleration processing unit 165 transmits the determination result to the region setting unit 161 and the coordinate setting unit 163. The region setting unit 161 moves the second region corresponding to a dragging distance and direction to reset the second region, while the coordinate setting unit 163 sets up a coordinate of the moved second region.

When it is determined that the received command of the drag input is not an acceleration command, the acceleration processing unit 165 transmits the determination result to the coordinate setting unit 163. The coordinate setting unit 163 calculates a selected position selected by the user corresponding to the dragging distance and direction within the currently set second region. Here, information used to determine whether the command is an acceleration command, for example, a table or graph of a moving distance at a speed, a moving distance per time, and a reference speed, is stored in the first storage unit 150, and the acceleration processing unit 163 may load the stored information to determine whether the command is an acceleration command.

Meanwhile, the acceleration processing unit 165 may be configured to calculate a moving speed of the drag input using the information about the moving distance and the moving time of the drag input and compare the moving speed with a preset reference speed to determine whether the command is an acceleration command. Here, if the drag input moves at the reference speed or higher, the region setting unit 161 moves the second region corresponding to a dragging direction, and the coordinate setting unit 163 sets up a coordinate of the moved second region.

On the contrary, if the moving speed of the drag input is lower than the reference speed, the coordinate setting unit 163 calculates a selected position selected by the user corresponding to the dragging distance and direction within the currently set second region.

The first controller 160 controls the display 130 to display the moved second region or the selected position selected by the user to be distinguished on the virtual inputter 30.

Hereinafter, the configuration of the input apparatus 200 will be described in detail.

The input apparatus 200 according to the present exemplary embodiment operates in touch mode in which an operation is performed based on a touch input of the user on the touch sensor 210. Here, an operation mode of the input apparatus 200 may further include a normal mode in which an operation is performed based on a user manipulation of the button inputter and a gesture mode in which an operation is performed based on a motion of the input apparatus 200. When the input apparatus 200 has a plurality of input modes, the input modes may be switched corresponding to a preset user manipulation, for example, a manipulation of a particular key button and a touch input with a preset pressure or at a preset distance. The present exemplary embodiment is not limited to the foregoing examples, and thus various types of user inputs may be used.

The touch sensor 210 may be configured as a touch pad to detect a touch input of the user and includes an input area formed in an upper part thereof and a touch sensor in a lower part. Diverse touch inputs of the user may be detected, for example, a tap, a click that is a stronger touch than the tap, a double click, a drag, a slide, and a flick. When the touch sensor 210 detects the touch input of the user, the second controller 260 generates a command corresponding to the detected touch input and transmits the command to the display apparatus 100 through the second communicator 240. The touch sensor 210 may detect the touch input of the user using a user's finger, a touch pen, or the like.

The second communicator 240 communicates with the display apparatus 100 and has a communication standard corresponding to the first communicator 140. For example, the second communicator 240 transmits and receives a command using a wireless communication method, which includes wireless infrared, RF, Zigbee, and Bluetooth communications.

The second storage unit 250 stores various types of data to be accessed by the second controller 260. In detail, the second storage unit 250 of the present exemplary embodiment stores information about the size of the input area of the touch sensor 210 to detect the touch input of the user and coordinate information set for the input area.

Further, the second storage unit 250 may further store and update information about a current input mode of the input apparatus 200.

The second storage 250 may be configured as a nonvolatile storage medium, such as a flash memory. The second storage unit 250 is accessible by the second controller 260, and the data stored in the second storage unit 250 may be read/recorded/revised/deleted/updated by the second controller 260.

The second controller 260 performs control operations over different components of the input apparatus 200. For example, the second controller 260 detects various user inputs and transmits commands corresponding to the user inputs to the display apparatus 100 through the second communicator 240, thereby controlling the entire operations of the input apparatus 200. Accordingly, the display apparatus 100 may perform control operations corresponding to the commands.

The second controller 260 sets up the coordinate information about the input area so that the input area of the touch sensor 210 corresponds to the second region and calculates a coordinate corresponding to the position of the touch input of the user detected by the touch sensor 210. The second controller 260 transmits the calculated coordinate as a command to the display apparatus 100 through the second communicator 240. Further, the second controller 260 may control the second communicator 240 to further transmit the information about the size of the input area of the touch sensor 210, and the first controller 160 of the display apparatus 100 may set up the first region and the second region using the received information about the size of the input area and store the first region and the second region in the first storage unit 150.

FIGS. 3 to 8 illustrate screens displayed on the display 130 of the display apparatus 100 according to exemplary embodiments.

As shown in FIG. 3, the virtual inputter 30 for improving user convenience of input of a user using the input apparatus 200 is displayed on a screen of the display 130. In the present exemplary embodiment, an area in which the virtual inputter 30 is displayed on the screen of the display 130 is defined as the first region. FIG. 3 to 7 show that the virtual inputter 30 displayed in the first region is a qwerty keyboard. Alternatively, the virtual inputter 30 may be configured as diverse types of virtual keyboards or virtual keypads that include at least one of a letter, a number, a symbol, and a special character in addition to the qwerty keyboard.

As shown in FIG. 3, the first controller 160 may control the display 130 to distinctively display a selected position 31 selected by the user on the virtual inputter 30. For example, the first controller 160 controls the display 130 to highlight the selected position 31 selected by the user using a pointer, a cursor or a highlighter or via focusing or flickering. The selected position 31 selected by the user highlighted on the virtual inputter 30 corresponds to a touched position 41 touched by the user on the touch sensor 210 of the input apparatus 200. Further, the virtual inputter 30 may include a display window 39 where an input result input by the user is displayed. In a predetermine time or when the user determines a selection of a particular letter or number by pressing a particular button, for example, an enter key, after the user selects the particular letter or number through a touch input, the display window 39 displays an input result.

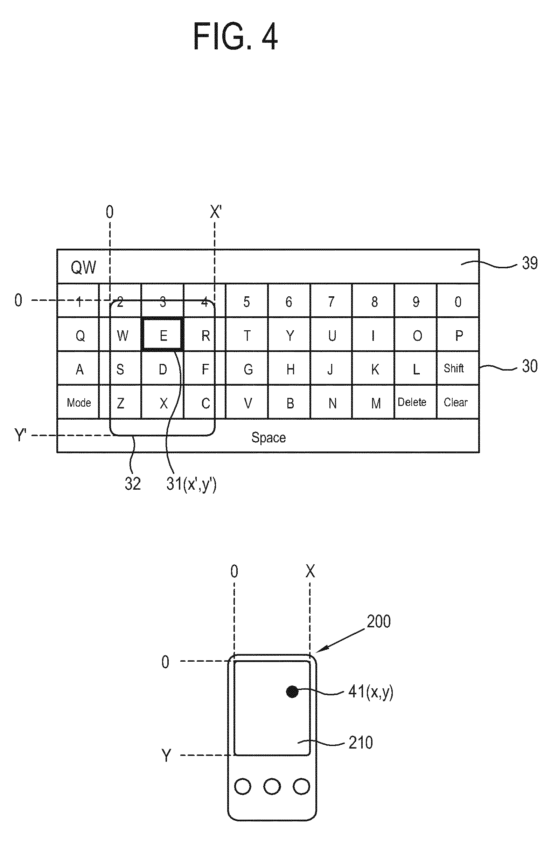

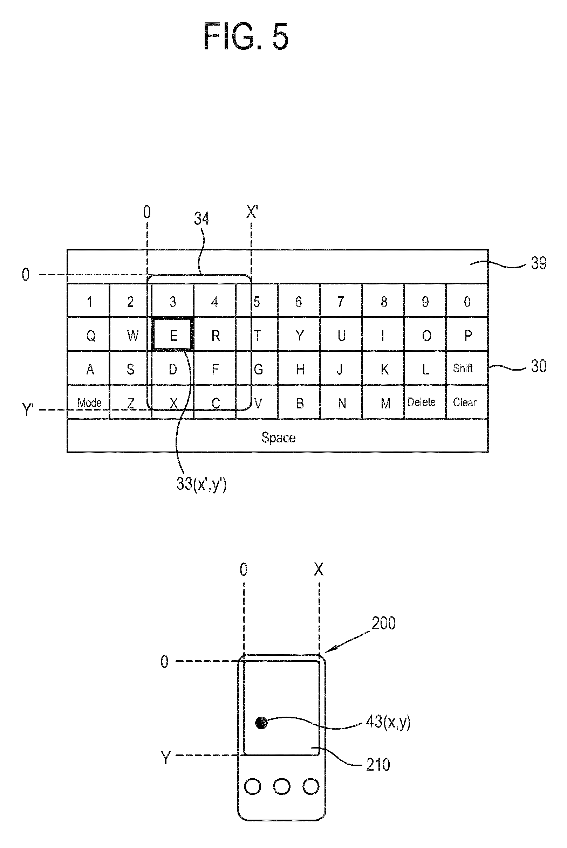

Hereinafter, setting the second region and the coordinate of the second region will be described with reference to FIGS. 4 and 5.

As shown in FIG. 4, when a touch input by the user with respect to a position 41 on the touch sensor 210 of the input apparatus 200 is received, the second controller 260 transmits coordinates (x, y) of the position 41 input by the user detected in the input area to the display apparatus 100 through the second communicator 240. Here, the second communicator 240 may further transmit coordinates (X, Y) of the entire size of the input area of the touch sensor 210.

The coordinate setting unit 163 of the display apparatus 100 may enlarge or reduce the coordinates (x, y) of the position 41 input by the user and the coordinates (X, Y) of the size of the input area at a preset ratio into (x', y') and (X', Y'). The region setting unit 161 sets up a second region 32 corresponding to the coordinates (o, o) to (X', Y'). Here, the enlargement or reduction ratio is stored in advance in the first storage unit 140, and information about the size of the input area of the touch sensor 210 may be stored in advance in the first storage unit 140 as necessary.

The coordinate setting unit 163 may set the coordinates (x', y') as a position 31 of the touch input by the user and determines (x', y') as a center of (X', Y') forming the second region 32. The coordinate setting unit 163 may set coordinates of the entire second region 32 based on the center (x', y'), that is, (o, o) to (X', Y').

In the present exemplary embodiment, the position 31 of the touch input by the user is set up first, and then a region formed of the coordinates (o, o) to (X', Y') based on the position 31 of the touch input (x', y') is determined as the second region 32. Here, the position 31 of the touch input (x', y') may correspond to a position selected previously (selected just before) or a predetermined default position.

With the second region 32 set up, when a command to cancel the touch input by the user is received from the input apparatus 200, the region setting unit 161 may cancel setup of the second region 32. Then, when a command of a touch input by the user is received, the second region is set up again.

For example, when a command that a touch input by the user is detected is received from the input apparatus 200 with the second region 32 not set up by cancellation of the touch input, the region setting unit 161 may set up an area selected previously (selected just before) as in FIG. 4 as the second region 32.

Alternatively, when a new touch input is detected after cancellation of region setup, a default area may be set up as a second region 34 regardless of previous region setup, as shown in FIG. 5.

For example, when a command that a touch input by the user is detected is received again from the input apparatus 200 with the second region 32 set up as in FIG. 4 not set up by cancellation of the touch input, the region setting unit 161 may set up a predetermined default area as in FIG. 5 as the second region 34, and the coordinate setting unit 163 sets up coordinates of the second region 34, i.e., (o, o) to (X', Y'), based on the default area and coordinates (x', y') of a position 33 input by the user. Here, the coordinates (x', y') of the position 33 input by the user may be determined by corresponding a position 43 (x, y) touch by the user with respect to the input area (X, Y) of the touch sensor 210 to the second region 34 (X', Y').

The first controller 160 may control the display 130 to distinctively display the second region 32 or 34 set up on the virtual inputter 30 by the region setting unit 161, as shown in FIGS. 4 and 5. For example, the first controller 160 may control the display 130 to highlight the second region 32 or 34 using a pointer, a cursor or a highlighter or via focusing or flickering. Here, the display 130 may use different forms or colors to distinguish the second region 32 or 34 and the position 31 or 33 selected by the user from each other.

Meanwhile, when a command corresponding to a drag input is received from the input apparatus 200, the first controller 160 may determine whether the command is an acceleration command using information about a moving distance and a moving time of the drag. To this end, when the drag input with respect to the touch sensor 210 is detected, the second controller 260 of the input apparatus 200 controls the second communicator 240 to transmit a distance and a speed of the drag to the display apparatus 100.

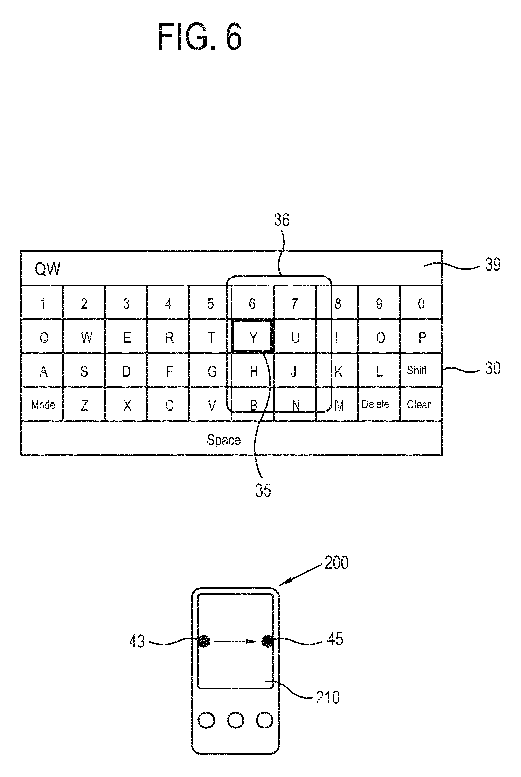

In detail, the first controller 160 compares a speed of the drag calculated based on the moving distance and the moving time of the drag with a preset reference speed, and determines that the command is an acceleration command when the speed is the reference speed or higher. When the command of the drag input is determined as an acceleration command, the region setting unit 161 moves the second region corresponding to a dragging direction and distance. For example, with the second region 34 and the position 33 input by the user set up as shown in FIG. 5, when a drag input in a right direction, as shown in FIG. 6, is detected and the detected drag input is determined as an acceleration command, the second region 34 is changed to a second region 36 corresponding to the dragging direction and distance. Also, the position 33 input by the user is changed to a position 35 input by the user according to the change of the second region 36.

The first controller 160 controls the display 130 to display the changed input position 35 and the changed second region 36, as shown in FIG. 6.

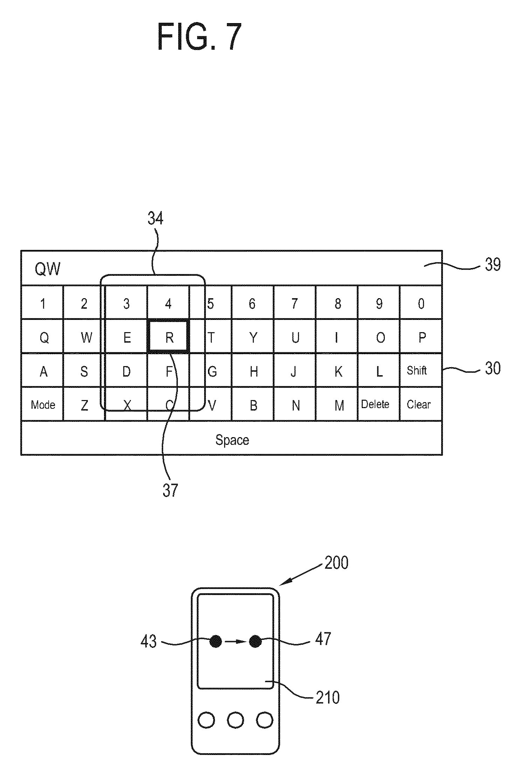

Meanwhile, the first controller 160 compares the speed of the drag calculated based on the moving distance and the moving time of the drag with the preset reference speed, and determines that the command is not an acceleration command when the speed is less than the reference speed. When the command of the drag input is not an acceleration command, the region setting unit 161 changes the position input by the user corresponding to the dragging direction and distance. For example, with the position 33 input by the user set up as shown in FIG. 5, when a drag input in a right direction, as shown in FIG. 7, is detected and the detected drag input is determined not as an acceleration command, the position 33 is changed to a position 37 input by the user within the second region 34 corresponding to the dragging direction and distance.

The first controller 160 controls the display 130 to display the changed input position 37 along with the unchanged second region 34, as shown in FIG. 7.

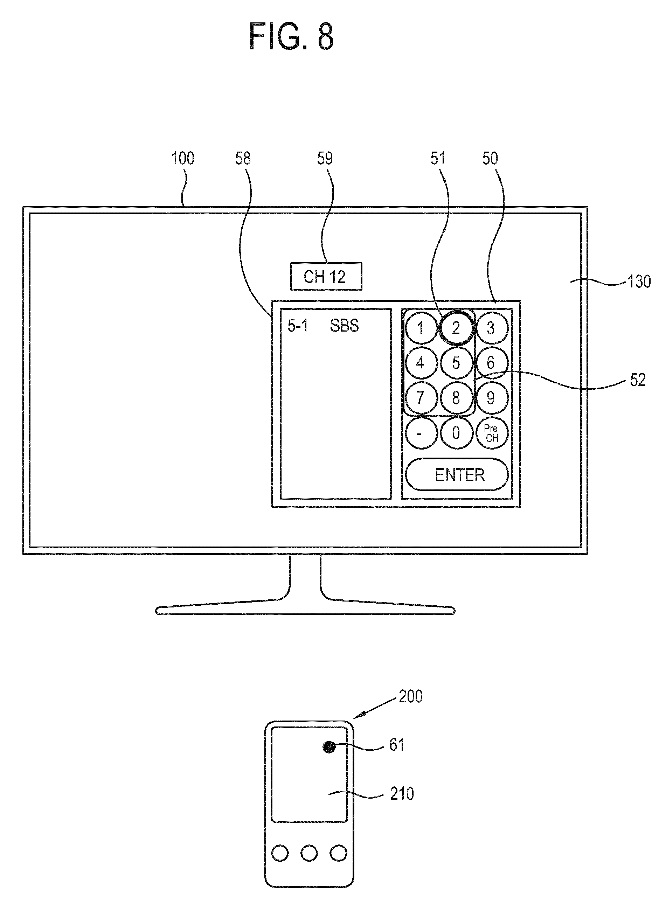

According to another exemplary embodiment, a virtual inputter 50 configured as a virtual keypad for channel selection, as shown in FIG. 8, may be displayed on the display 130.

The input apparatus 200 receives a user touch input on a position 61 of the touch sensor 210 of the input apparatus, and the second controller 260 transmits coordinates (x, y) of the input position and a size of all coordinates (X, Y) of an input area to the display apparatus 100 through the second communicator 240.

The first controller 160 of the display apparatus 100 sets up coordinates of a second region 52 in a first region where the virtual inputter 50 is displayed and coordinates of a user input position 51 using the size of the input area and the coordinates of the input position and controls the display 130 to display the second region 52 and the user input position 51. Here, the virtual keypad 50 of FIG. 8 may further include a channel list window 58 to display a list of previously selected channels for improving user convenience of channel selection and a display window 59 to display a channel selection result.

Likewise, in the exemplary embodiment illustrated in FIG. 8, when a drag input on the touch sensor 210 is detected, it is determined whether a corresponding command is an acceleration command, accordingly changing a second region and a user input position or changing only a user input position within the preset second region for display.

Here, the second region may be changed to not only a number button area but also the channel list window 58 within the virtual keypad 50.

Hereinafter, control methods of the input apparatus 200 and the display apparatus 100 according to exemplary embodiments will be described with reference to the accompanying drawings.

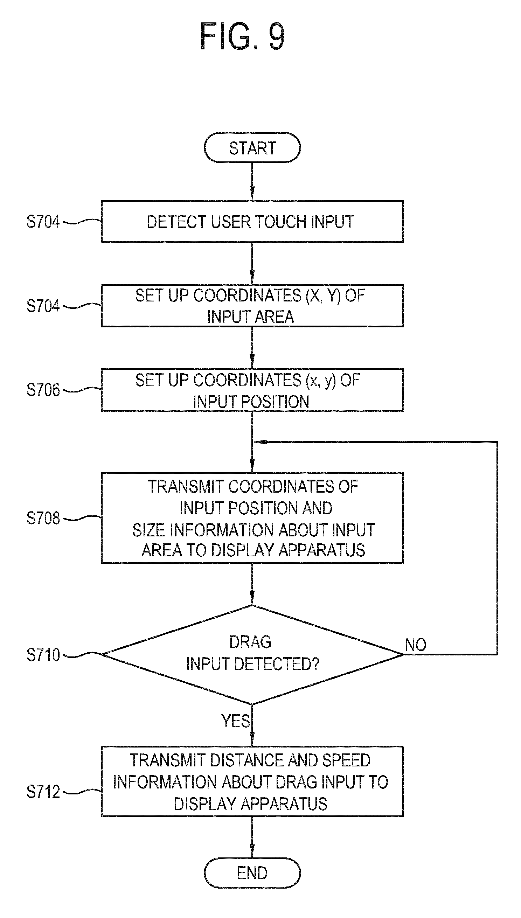

FIG. 9 is a flowchart illustrating a control method of the input apparatus 200 according to an exemplary embodiment.

As shown in FIG. 9, the input apparatus 200 may detect a user touch input on the touch sensor 210 (S702).

The second controller 260 sets up coordinates (X, Y) of the entire input area of the touch sensor 210 in response to the detection in S702 (S704).

The second controller 260 sets up coordinates (x, y) of a user input position within an area of the coordinates set up in S704 (S706).

The second controller 260 controls the second communicator 240 to transmit information about the input position, i.e., the coordinates (x, y), and information about a size of the input area, i.e., the coordinates (o, o) to (X, Y), set up in S704 and S706, to the display apparatus 100 (S708). Here, the information about the input position and the size of the input area may be transmitted to the display apparatus 100 on a preset cycle.

The second controller 260 may monitor whether a drag input on the touch sensor 210 is detected (S710).

As a result of monitoring in S710, when the drag input is detected, the second controller 260 controls the second communicator 240 to transmit a distance and a speed of the drag input or a distance and a time of the drag input to the display apparatus 100 (S712).

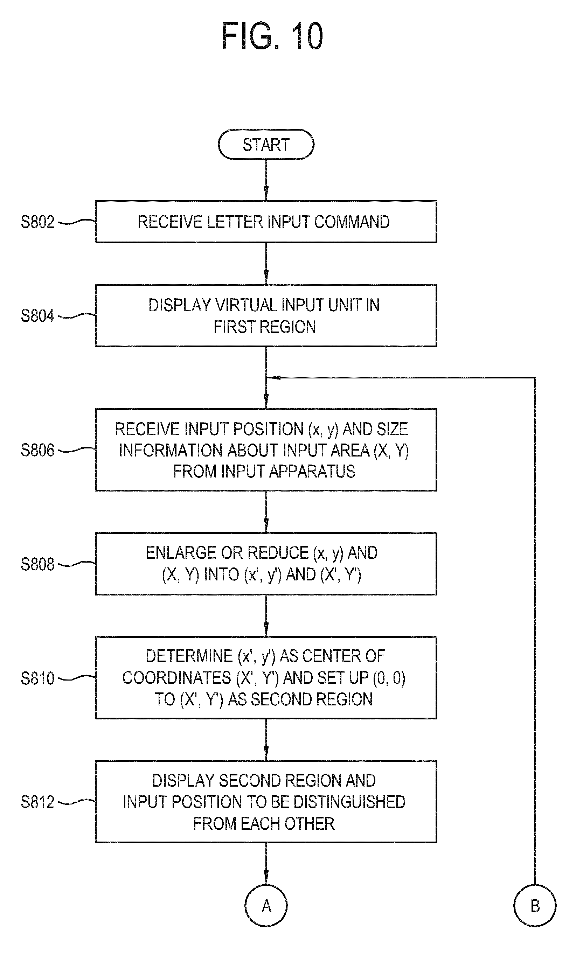

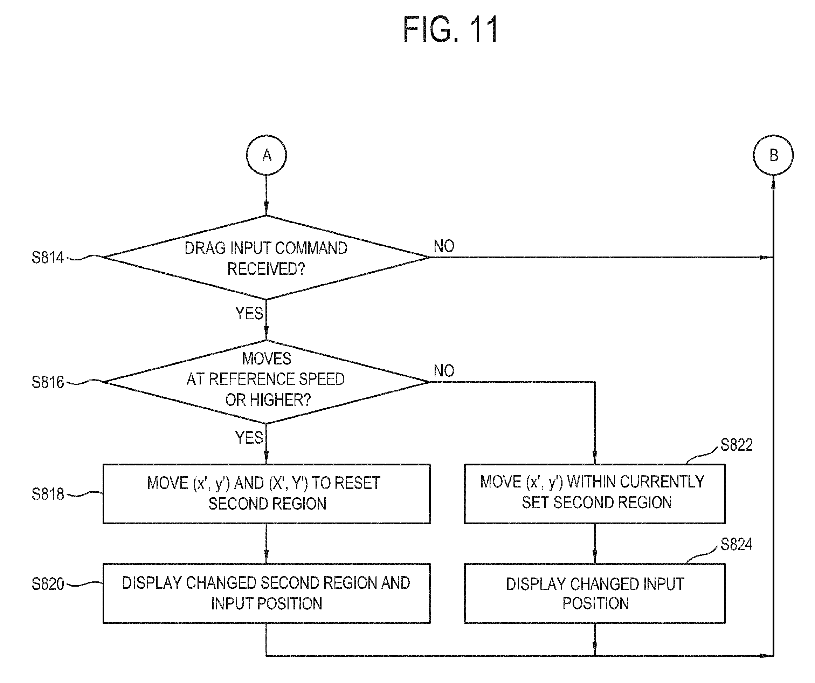

FIGS. 10 and 11 are flowcharts illustrating a control method of the display apparatus 100 according to an exemplary embodiment

As shown in FIG. 10, the display apparatus 100 may receive a command with respect to letter input from the input apparatus 200 (S802).

The first controller 160 displays the virtual inputter 30 in the first region of the display 130 corresponding to the command received in S802 (S804).

The display apparatus 100 receives information about a user input position on the touch sensor 210, i.e., coordinates (x, y), and information about a size of an input area, i.e., coordinates (o, o) to (X, Y), from the input apparatus 200 (S806). Here, the received information is the information transmitted by the input apparatus 200 in S708 of FIG. 9.

The first controller 160 enlarges or reduces (x, y) and (X, Y) received in S806 at a preset ratio into (x', y') and (X', Y') (S808).

The first controller 160 determines (x', y') as a center of (X', Y') and sets up an area of (o, o) to (X', Y') as the second region 32 corresponding to the input area of the touch sensor 210 (S810).

The first controller 160 controls the display 130 to display the second region 32 and the user input position 31 to be distinguished from each other on the virtual inputter 30 (S812).

Meanwhile, the display apparatus 100 may monitor whether a command of a drag input is received from the input apparatus (S814). Here, the received command of the drag input is the command transmitted by the input apparatus 200 in S712 of FIG. 9.

As a result of monitoring in S814, when the command of the drag input is received, the first controller 160 may determine whether the received drag input moves at a reference speed or higher (S816).

When the drag input moves at the reference speed of higher, the first controller 160 changes and resets the second region by moving (x', y') and (X', Y') corresponding to a moving direction and a moving distance of the drag input (S818).

The first controller 160 controls the display 130 to display the second region and the user input position corresponding to the changed second region (S820).

When the drag input moves at a speed lower than the reference speed in S816, the first controller 160 changes and resets the user input position by moving (x', y') within the currently set second region (X', Y') corresponding to the moving direction and the moving distance of the drag input (S822).

The first controller 160 controls the display 130 to display the user input position changed within the currently set second region in S822 (S824).

According to the exemplary embodiments described above, the input area of the touch sensor 210 of the input apparatus 200 having no separate display screen is set corresponding to an area of the virtual inputter 30 of the display apparatus 100, so that a space for each button becomes large, thereby reducing errors in touch input and improving user convenience.

Although exemplary embodiments have been shown and described, it will be appreciated by those skilled in the art that changes may be made in exemplary embodiments without departing from the invention, the scope of which is defined in the appended claims.

## Claims

1. A display apparatus comprising:
a display configured to display an image;
a communicator configured to communicate with an input apparatus comprising a touch sensor configured to receive a user touch input; and
a controller configured to set an input area of the touch sensor to correspond to a second region that is part of a first region of a screen displayed on the display,
wherein the second region is a variable region within the first region.

2. The display apparatus of claim 1, wherein the controller is further configured to determine a coordinate of the second region corresponding to a coordinate of the input area and control the communicator to receive coordinate information corresponding to a position of the user touch input on the touch sensor from the input apparatus.

3. The display apparatus of claim 2, wherein the controller is further configured to set the position of the user touch input as a center of the coordinate of the second region.

4. The display apparatus of claim 2, wherein the communicator is further configured to receive size information of the input area.

5. The display apparatus of any one of claims 1 to 4, wherein a virtual inputter comprising at least one of a letter, a number, a symbol, and a special character is displayed in the first region.

6. The display apparatus of any one of claims 1 to 4, wherein the display is further configured to display the first region, the second region, and a user selected position such that they are distinguished from one another, and the controller is further configured to determine whether a drag input command is an acceleration command by using a moving distance and a moving time of a drag in response to the drag input command on the touch sensor being received from the input apparatus, and control the display to change and display the second region in response to the drag input command being determined as an acceleration command.

7. The display apparatus of claim 6, wherein the controller is further configured to control the display to change and display the selected position within the second region in response to the drag input command being determined not to be an acceleration command.

8. An input apparatus of a display apparatus, the input apparatus comprising:
a communicator configured to communicate with the display apparatus;
a touch sensor configured to receive a user touch input; and
a controller configured to set an input area of the touch sensor to correspond to a second region that is part of a first region of a screen displayed on a display of the display apparatus,
wherein the second region is a variable region within the first region.

9. The input apparatus of claim 8, wherein the controller is further configured to determine a coordinate of the input area corresponding to a coordinate of the second region and control the communicator to transmit coordinate information corresponding to a position of the user touch input on the touch sensor to the display apparatus.

10. The input apparatus of claim 9, wherein the controller is further configured to control the communicator to transmit size information of the input area.

11. A control method of a display apparatus, the control method comprising:
receiving a command with respect to a user touch input from an input apparatus comprising a touch sensor to receive the user touch input;
setting an input area of the touch sensor to correspond to a second region that is part of a first region of a screen displayed on a display; and
displaying the second region such that the second region is distinguished from the first region,
wherein the second region is a variable region within the first region.

12. The control method of claim 11, wherein the setting comprises:
determining a coordinate of the second region corresponding to a coordinate of the input area; and
receiving coordinate information corresponding to a position of the user touch input on the touch sensor from the input apparatus.

13. The control method of claim 11 or claim 12, wherein the displaying displays a user selected position such that the user selected position is distinguished from the first region and the second region, and
the control method further comprises:
receiving a drag input command on the touch sensor from the input apparatus;
determining whether the drag input command is an acceleration command by using a moving distance and a moving time of a drag; and
changing and displaying the second region in response to the drag input command being determined as an acceleration command.

14. The control method of claim 13, further comprising changing and displaying the selected position within the second region in response to the drag input command being determined not to be an acceleration command.

15. A control method of an input apparatus of a display apparatus, the control method comprising:
receiving a user touch input on a touch sensor; and
setting an input area of the touch sensor to correspond to a second region that is part of a first region of a screen displayed on a display of the display apparatus,
wherein the second region is a variable region within the first region.
